(19) **Europäisches Patentamt / European Patent Office / Office européen des brevets**

(11) **EP 4 641 740 A1**

(12) **EUROPEAN PATENT APPLICATION**
published in accordance with Art. 153(4) EPC

(43) Date of publication:
29.10.2025 Bulletin 2025/44

(21) Application number: 23906724.2

(22) Date of filing: 06.12.2023

(51) International Patent Classification (IPC):
$H01M\ 10/058^{(2010.01)}$    $H01M\ 4/13^{(2010.01)}$
$H01M\ 4/62^{(2006.01)}$    $H01M\ 10/054^{(2010.01)}$
$H01M\ 10/0562^{(2010.01)}$

(52) Cooperative Patent Classification (CPC):
H01M 4/13; H01M 4/62; H01M 10/054;
H01M 10/0562; H01M 10/058; Y02E 60/10

(86) International application number:
PCT/JP2023/043598

(87) International publication number:
WO 2024/135358 (27.06.2024 Gazette 2024/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.12.2022 JP 2022204526

(71) Applicant: Nippon Electric Glass Co., Ltd.
Otsu-shi, Shiga 520-8639 (JP)

(72) Inventors:
• KANO, Gentaro
Otsu-shi, Shiga 520-8639 (JP)
• IKEJIRI, Junichi
Otsu-shi, Shiga 520-8639 (JP)

• YAMAUCHI, Hideo
Otsu-shi, Shiga 520-8639 (JP)
• MASUDA, Noriaki
Otsu-shi, Shiga 520-8639 (JP)
• TSUNODA, Kei
Otsu-shi, Shiga 520-8639 (JP)
• TANAKA, Ayumu
Otsu-shi, Shiga 520-8639 (JP)
• HIMEI, Kumiko
Otsu-shi, Shiga 520-8639 (JP)
• YAMATANI, Masahiro
Otsu-shi, Shiga 520-8639 (JP)
• AOKI, Shigeya
Otsu-shi, Shiga 520-8639 (JP)

(74) Representative: Tetzner, Michael
Tetzner & Partner mbB
Patent- und Rechtsanwälte
Van-Gogh-Strasse 3
81479 München (DE)

(54) **POWER STORAGE ELEMENT AND ALL-SOLID-STATE SECONDARY BATTERY**

(57)    Provided is an electrical storage element that can increase the capacity retention of a secondary battery during charge and discharge at high currents and the cycle characteristics of the secondary battery during repeated charge and discharge. An electrical storage element 1 includes: a solid electrolyte layer 2; an electrode layer 3 provided on one principal surface of the solid electrolyte layer 2 and containing an electrode active material 5 and a solid electrolyte 6a, 6b; and a current collector layer 4 provided on a principal surface of the electrode layer 3 opposite to the solid electrolyte layer 2 side, wherein a first electrode layer portion 3A of the electrode layer 3 disposed on the solid electrolyte layer 2 side than a middle of the electrode layer 3 in a direction of thickness of the electrode layer 3 has a higher content rate of the solid electrolyte 6a, 6b to the electrode active material 5 than a second electrode layer portion 3B of the electrode layer 3 disposed on the current collector layer 4 side than the middle of the electrode layer 3 in the direction of thickness of the electrode layer 3.

**(Cont. next page)**

[FIG. 1]

**Description**

[Technical Field]

The present invention relates to electrical storage elements and all-solid-state secondary batteries in which the electrical storage elements are used.

[Background Art]

Lithium-ion secondary batteries have secured their place as high-capacity and light-weight power sources essential for mobile devices, electric vehicles, and so on. However, current lithium-ion secondary batteries employ as their electrolytes, mainly, combustible organic electrolytic solutions, which raises concerns about the risk of burning or explosion. As a solution to this problem, all-solid-state lithium-ion batteries using a solid electrolyte instead of an organic electrolytic solution have been under development. However, because, as for lithium, there are concerns about such issues as global rise in raw and processed material costs, all-solid-state sodium-ion secondary batteries are also being developed.

Patent Literature 1 below discloses an all-solid-state secondary battery including: a solid electrolyte sheet; and an electrode layer formed on a surface of the solid electrolyte sheet. Patent Literature 1 describes that the solid electrolyte sheet is formed in a manner that a second solid electrolyte layer is formed on at least one surface of a first solid electrolyte layer. It is described therein that the second solid electrolyte layer is a porous solid electrolyte layer. It is also described that the first and second solid electrolyte layers can be formed by firing green sheets. Furthermore, Patent Literature 1 describes that since the solid electrolyte sheet is partially made of a porous layer, the solid electrolyte sheet can increase the adhesion to the electrode layer.

[Citation List]

[Patent Literature]

[PTL 1]
WO 2021/045039

[Summary of Invention]

[Technical Problem]

A general all-solid-state secondary battery has a problem of difficulty in taking out capacity sufficiently during charge and discharge at high currents. In a sintered all-solid-state secondary battery formed by firing a solid electrolyte layer and an electrode layer, there is a problem that when charge and discharge are repeated, the charge and discharge performance decreases and, thus, the cycle characteristics are likely to deteriorate.

An object of the present invention is to provide: an electrical storage element that can increase the capacity retention of a secondary battery during charge and discharge at high currents and the cycle characteristics of the secondary battery during repeated charge and discharge; and an all-solid-state secondary battery in which the electrical storage element is used.

[Solution to Problem]

A description will be given of aspects of an electrical storage element and an all-solid-state secondary battery, which can solve the above problem.

An electrical storage element of aspect 1 in the present invention includes: a solid electrolyte layer; an electrode layer provided on one principal surface of the solid electrolyte layer and containing an electrode active material and a solid electrolyte; and a current collector layer provided on a principal surface of the electrode layer opposite to the solid electrolyte layer side, wherein a first electrode layer portion of the electrode layer disposed on the solid electrolyte layer side than a middle of the electrode layer in a direction of thickness of the electrode layer has a higher content rate of the solid electrolyte to the electrode active material than a second electrode layer portion of the electrode layer disposed on the current collector layer side than the middle of the electrode layer in the direction of thickness of the electrode layer.

An electrical storage element of aspect 2 is the electrical storage element according to aspect 1, wherein the content rate of the solid electrolyte to the electrode active material in the electrode layer preferably increases from the current collector layer side toward the solid electrolyte side.

An electrical storage element of aspect 3 is the electrical storage element according to aspect 1 or 2, wherein when the solid electrolyte layer is a first solid electrolyte layer being a dense layer, the electrode layer is preferably formed in a manner that an electrode material containing an electrode active material and a solid electrolyte is disposed inside a second solid electrolyte layer being a porous layer.

An electrical storage element of aspect 4 is the electrical storage element according to any one of aspects 1 to 3, wherein the first electrode layer portion preferably has a larger void fraction than the second electrode layer portion.

An electrical storage element of aspect 5 is the electrical storage element according to any one of aspects 1 to 4, wherein the solid electrolyte preferably contains at least one type of material selected from the group consisting of β"-alumina, β-alumina, and NASICON crystals.

An electrical storage element of aspect 6 is the electrical storage element according to any one of aspects 1 to 5, wherein the solid electrolyte layer and the electrode layer are preferably sintered bodies.

An all-solid-state secondary battery of aspect 7 in the present invention includes the electrical storage element according to any one of aspects 1 to 6.

[Advantageous Effects of Invention]

The present invention enables provision of: an electrical storage element that can increase the capacity retention of a secondary battery during charge and discharge at high currents and the cycle characteristics of the secondary battery during repeated charge and discharge; and an all-solid-state secondary battery in which the electrical storage element is used.

[Brief Description of Drawings]

[Fig. 1]

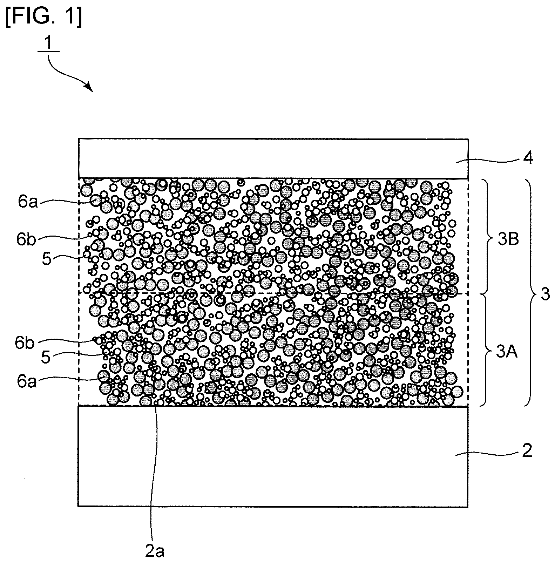

Fig. 1 is a schematic cross-sectional view showing an electrical storage element according to one embodiment of the present invention.
[Fig. 2]

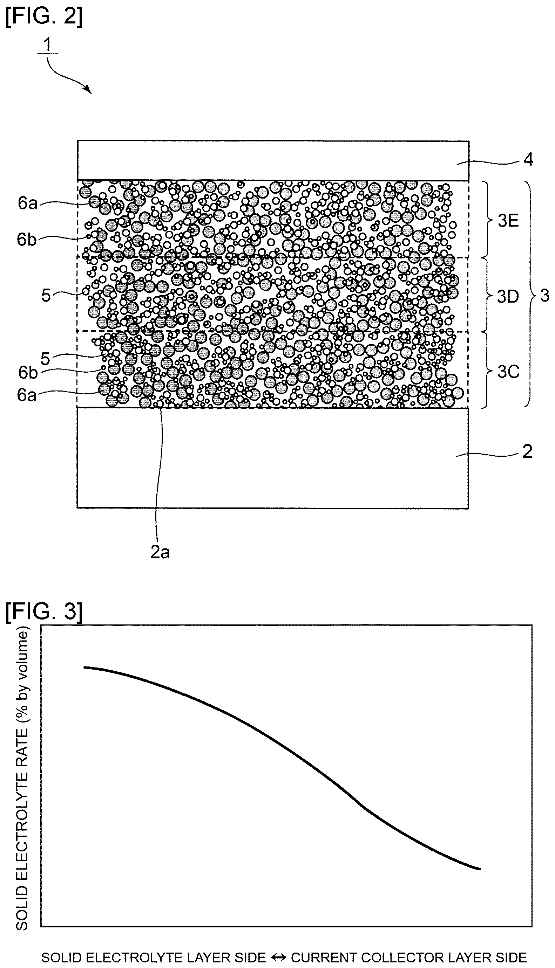

Fig. 2 is a schematic cross-sectional view of the electrical storage element according to the one embodiment of the present invention when an electrode layer thereof is sectioned into first to third electrode layer portions.
[Fig. 3]
Fig. 3 is a schematic graph showing an example of a composition distribution of the electrode layer in the electrical storage element according to the one embodiment of the present invention.
[Fig. 4]

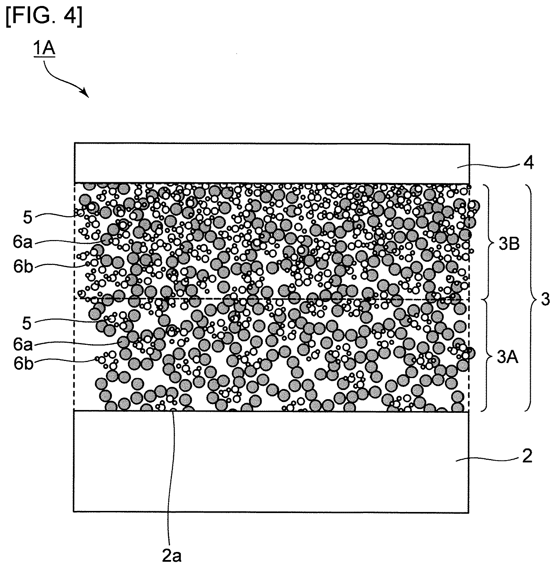

Fig. 4 is a schematic cross-sectional view showing an electrical storage element according to a modification.
[Fig. 5]

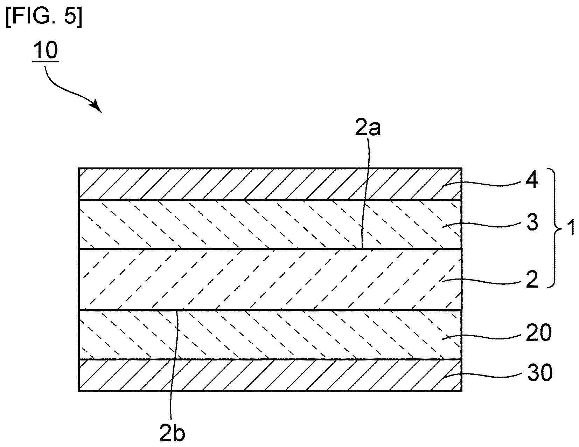

Fig. 5 is a schematic cross-sectional view showing an all-solid-state secondary battery according to one embodiment of the present invention.

[Description of Embodiments]

Hereinafter, a description will be given of preferred embodiments. However, the following embodiments are merely illustrative and the present invention is not intended to be limited to the following embodiments. Throughout the drawings, members having substantially the same functions may be referred to by the same reference characters.

[Electrical storage element]

Fig. 1 is a schematic cross-sectional view showing an electrical storage element according to an embodiment of the present invention. As shown in Fig. 1, the electrical storage element 1 includes a solid electrolyte layer 2, an electrode layer 3, and a first current collector layer 4. The electrode layer 3 and the first current collector layer 4 are layered in this order on a first principal surface 2a of the solid electrolyte layer 2.

The electrode layer 3 contains an electrode active material 5 and solid electrolytes 6a, 6b. In this embodiment, the electrode active material 5 is a positive-electrode active material and the electrode layer 3 is a positive electrode layer. However, in the present invention, it is also possible that the electrode active material 5 is a negative-electrode active material and the electrode layer 3 is a negative electrode layer.

The electrode layer 3 includes: a first electrode layer portion 3A disposed on the solid electrolyte layer 2 side than the middle of the electrode layer 3 in the direction of thickness of the electrode layer 3; and a second electrode layer portion 3B disposed on the first current collector layer 4 side than the middle of the electrode layer 3 in the direction of thickness of the electrode layer 3. In this embodiment, the first electrode layer portion 3A closer to the solid electrolyte layer 2 has a higher content rate of solid electrolyte to electrode active material than the second electrode layer portion 3B closer to the first current collector layer 4.

The content rates of solid electrolyte to electrode active material in the first electrode layer portion 3A and the second electrode layer portion 3B can be determined by elemental analysis of a cross section of the electrode layer 3 taken along the direction of thickness thereof. The elemental analysis can be conducted, for example, by calculating, in each divided section of the electrode, the molar ratio among the content of Fe contained in the positive-electrode active material (electrode active material), the content of Al contained in the solid electrolyte, and the content of C contained in the conductive agent with an energy dispersive X-ray fluorescence analyzer (EDX). Then, from the respective specific gravities of the electrode active material, the solid electrolyte, and the conductive agent, the volume ratio between the electrode active material and the solid electrolyte in the electrode composite material can be determined. Furthermore, from a cross-sectional image of the electrode obtained with a scanning electron microscope (SEM), the void fraction and electrode composite material occupancy in each divided section of the electrode layer can be calculated using image analysis software (for example, ImageJ). Specifically, after the cross-sectional image of the electrode layer is binarized (converted into two colors: black and white), the void fraction is determined. The binarization is done by appropriately adjusting the threshold to turn voids black while viewing the actual image. The calculation of the void fraction is done by dividing the area (number of pixels) of a black portion in each divided section of the electrode layer by the area (number of pixels) of the entire divided section. Next, from the obtained void fraction, the occupancy of the electrode composite material other than the voids is determined. By multiplying the determined electrode composite material occupancy by the volume ratio between the electrode active material and the solid electrolyte in the composite material, the volume ratio between the electrode active material and the solid electrolyte in each divided section of the electrode layer can be calculated.

Since the electrical storage element 1 according to this embodiment has the above structure, the capacity retention of the secondary battery during charge and discharge at high currents and the cycle characteristics thereof during repeated charge and discharge can be increased.

Heretofore, in all-solid-state secondary batteries, a large number of voids present in the electrode composite material layer and a high contact resistance among solid electrolyte particles in the electrode composite material cause high carrier ions transfer resistance in the electrode layer. Therefore, during charge and discharge at high currents, an uneven reaction distribution may occur in the direction of thickness of the electrode layer (that is, reaction may be more likely to occur near the solid electrolyte layer than near the current collector layer), which presents a problem of difficulty in taking out capacity sufficiently.

Furthermore, in a sintered all-solid-state secondary battery formed by firing a solid electrolyte layer and an electrode layer, when charge and discharge are repeated, expansion and shrinkage of the electrode active material may cause defects, such as cracks, inside the electrical storage element, which presents a problem of decrease in the charge and discharge performance and, thus, ease of deterioration in the cycle characteristics.

Considering the above problems, the inventors found that when the composition of the electrode composite material is adjusted so that a portion thereof nearer the solid electrolyte layer 2 more easily developing the charge and discharge reaction has a higher proportion of solid electrolytes 6a, 6b, an uneven reaction distribution in the direction of thickness of the electrode layer 3 can be reduced. Specifically, the inventors found that when the content rate of solid electrolyte to electrode active material in the first electrode layer portion 3A closer to the solid electrolyte layer 2 is made higher than that in the second electrode layer portion 3B closer to the first current collector layer 4, an uneven reaction distribution in the direction of thickness of the electrode layer 3 can be reduced.

In the electrical storage element 1 according to this embodiment, by reducing the uneven reaction distribution in the direction of thickness in the electrode layer 3, the capacity retention of the secondary battery during charge and discharge at high currents can be increased. In addition, by reducing the uneven reaction distribution in the direction of thickness in the electrode layer 3, the difference in expansion and shrinkage within the electrode layer 3 in the direction of thickness thereof can be reduced and, thus, the cycle characteristics can be increased.

In this embodiment, the content rate X of solid electrolyte to electrode active material (solid electrolyte to electrode active material) in the first electrode layer portion 3A is preferably not less than 5% by volume, more preferably not less than 20% by volume, preferably not more than 200% by volume, and more preferably not more than 150% by volume. When the rate X (solid electrolyte to electrode active material) in the first electrode layer portion 3A is within the above range, the capacity retention of the secondary battery during charge and discharge at high currents and the cycle characteristics thereof during repeated charge and discharge can be further increased.

The content rate Y of solid electrolyte to electrode active material (solid electrolyte to electrode active material) in the second electrode layer portion 3B is preferably not less than 5% by volume, more preferably not less than 10% by volume, preferably not more than 200% by volume, and more preferably not more than 100% by volume. When the rate Y (solid electrolyte to electrode active material) in the second electrode layer portion 3B is within the above range, the capacity retention of the secondary battery during charge and discharge at high currents and the cycle characteristics thereof during repeated charge and discharge can be further increased.

The ratio (X/Y) of the rate X (solid electrolyte to electrode active material) in the first electrode layer portion 3A to the rate Y (solid electrolyte to electrode active material) in the second electrode layer portion 3B is preferably not less than 1.01, more preferably not less than 1.05, preferably not more than 3, and more preferably not more than 1.5. When the ratio (X/Y) is within the above range, the capacity retention of the secondary battery during charge and discharge at high currents and the cycle characteristics thereof during repeated charge and discharge can be further increased.

Furthermore, it is preferred that when, as shown in Fig. 2, the electrode layer 3 is divided into three equal sections in the direction of thickness thereof and the three sections are defined as a first electrode layer portion 3C, a second electrode layer portion 3D, and a third electrode layer portion 3E in an order closer to the solid electrolyte layer 2, the content rate of solid electrolyte to electrode active material increases in the order of the third electrode layer portion 3E, the second electrode layer portion 3D, and the first electrode layer portion 3C. When, as shown in Fig. 3, the content rate of solid electrolyte to electrode active material in the electrode layer 3 has a gradient increasing from the portion close to the first current collector layer 4 toward the portion close to the solid electrolyte layer 2, the capacity retention of the secondary battery during charge and discharge at high currents and the cycle characteristics thereof during repeated charge and discharge can be further increased.

The content rates of solid electrolyte to electrode active material in the first electrode layer portion 3C, the second electrode layer portion 3D, and the third electrode layer portion 3E can also be determined by the above-described elemental analysis of the electrode layer 3 along the direction of thickness thereof.

The content rate X of solid electrolyte to electrode active material (solid electrolyte to electrode active material) in the first electrode layer portion 3C is preferably not less than 5% by volume, more preferably not less than 20% by volume, preferably not more than 200% by volume, and more preferably not more than 150% by volume.

The content rate Y of solid electrolyte to electrode active material (solid electrolyte to electrode active material) in the second electrode layer portion 3D is preferably not less than 5% by volume, more preferably not less than 15% by volume, preferably not more than 200% by volume, and more preferably not more than 125% by volume.

The content rate Z of solid electrolyte to electrode active material (solid electrolyte to electrode active material) in the third electrode layer portion 3E is preferably not less than 5% by volume, more preferably not less than 10% by volume, preferably not more than 200% by volume, and more preferably not more than 100% by volume.

In the present invention, it is also possible that, like an electrical storage element 1A according to a modification shown in Fig. 4, the void fraction of the first electrode layer portion 3A is made larger than that of the second electrode layer portion 3B and the content rate of solid electrolyte to electrode active material in the first electrode layer portion 3A closer to the solid electrolyte layer 2 is made higher than that in the second electrode layer portion 3B closer to the first current collector layer 4.

The void fractions of the first electrode layer portion 3A and the second electrode layer portion 3B can be determined by image analysis of a cross section of the electrode layer 3 taken along the direction of thickness thereof. In the image analysis, after a cross-sectional image of the electrode layer obtained, for example, with a scanning electron microscope (SEM) or by CT (computed tomography) is binarized (converted into two colors: black and white) using image processing software (for example, ImageJ), the void fractions are determined. The binarization is done by appropriately adjusting the threshold to turn voids black while viewing the actual image. The calculation of the void fraction is done by dividing the area (number of pixels) of a black portion in each divided section of the electrode layer by the area (number of pixels) of the entire divided section.

The void fraction of the first electrode layer portion 3A is preferably not less than 30% by volume, more preferably not less than 50% by volume, preferably not more than 90% by volume, and more preferably not more than 80% by volume. When the void fraction of the first electrode layer portion 3A is within the above range, the cycle characteristics of the secondary battery during repeated charge and discharge can be further increased.

The void fraction of the second electrode layer portion 3B is preferably not less than 20% by volume, more preferably not less than 30% by volume, preferably not more than 80% by volume, and more preferably not more than 60% by volume. When the void fraction of the second electrode layer portion 3B is within the above range, the cycle characteristics of the secondary battery during repeated charge and discharge can be further increased.

Furthermore, the void fraction of the electrode layer 3 preferably has a gradient increasing from the portion close to the first current collector layer 4 toward the portion close to the solid electrolyte layer 2. In this case, the cycle characteristics of the secondary battery during repeated charge and discharge can be further increased.

Hereinafter, a description will be given of the structures of individual layers in the electrical storage element according to the present invention, such as the electrical storage element 1 and the electrical storage element 1A.

(Solid Electrolyte Layer)

The solid electrolyte constituting the solid electrolyte layer 2 is preferably made of a sodium-ion conductive oxide.

Examples of the sodium-ion conductive oxide include compounds containing: at least one selected from among Al, Y, Zr, Si, and P; Na; and O. Specific examples of the sodium-ion conductive oxide include beta-alumina and NASICON crystals, both of which have excellent sodium-ion conductivity. Among them, the sodium-ion conductive oxide is preferably at least one type of sodium-ion conductive oxide selected from the group consisting of β"-alumina, β-alumina, and NASICON crystals. The sodium-ion conductive oxide is more preferably β-alumina or β"-alumina. These materials have more excellent sodium-ion conductivity.

Beta-alumina includes two types of crystals: β-alumina (theoretical composition formula: $Na_2O \cdot 11Al_2O_3$) and β"-alumina (theoretical composition formula: $Na_2O \cdot 5.3Al_2O_3$). β"-alumina is a metastable material and is therefore generally used in a state in which $Li_2O$ or MgO is added as a stabilizing agent thereto. β"-alumina has a higher sodium-ion conductivity than β-alumina. Therefore, β"-alumina alone or a mixture of β"-alumina and β-alumina is preferably used and $Li_2O$-stabilized β"-alumina ($Na_{1.7}Li_{0.3}Al_{10.7}O_{17}$) or MgO-stabilized β"-alumina (($Al_{10.32}Mg_{0.68}O_{16}$)($Na_{1.68}O$)) is more preferably used.

Examples of the type of NASICON crystals include $Na_3Zr_2Si_2PO_{12}$, $Na_{3.2}Zr_{1.3}Si_{2.2}P_{0.8}O_{10.5}$, $Na_3Zr_{1.6}Ti_{0.4}Si_2PO_{12}$, $Na_3Hf_2Si_2PO_{12}$, $Na_{3.4}Zr_{0.9}Hf_{1.4}Al_{0.6}Si_{1.2}P_{1.8}O_{12}$, $Na_3Zr_{1.7}Nb_{0.24}Si_2PO_{12}$, $Na_{3.6}Ti_{0.2}Y_{0.8}Si_{2.8}O_9$, $Na_3Zr_{1.88}Y_{0.12}Si_2PO_{12}$, $Na_{3.12}Zr_{1.88}Y_{0.12}Si_2PO_{12}$, $Na_{3.05}Zr_2Si_{2.06}P_{0.95}O_{12}$, $Na_{3.4}Zr_2Si_{2.4}P_{0.6}O_{12}$, $Na_{3.4}Zr_{1.9}Mg_{0.1}Si_{2.4}P_{0.6}O_{12}$, $Na_{3.4}Zr_{1.9}Zn_{0.1}Si_{2.4}P_{0.6}O_{12}$, $Na_{3.4}Zr_{1.9}Mg_{0.1}Si_{2.2}P_{0.8}O_{12}$, $Na_{3.4}Zr_{1.9}Zn_{0.1}Si_{2.2}P_{0.8}O_{12}$, $Na_{3.6}Zr_{0.13}Yb_{1.67}Si_{0.11}P_{2.9}O_{12}$, and $Na_5YSi_4O_{12}$. Among them, the type of NASICON crystals is preferably $Na_{3.4}Zr_2Si_{2.4}P_{0.6}O_{12}$ or $Na_{3.05}Zr_2Si_{2.06}P_{0.95}O_{12}$. In this case, the sodium-ion conductivity can be further increased.

The solid electrolyte layer 2 can be produced by mixing raw material powders, forming the mixed raw material powder into a shape, and then firing it. For example, the solid electrolyte layer 2 can be produced by making the raw material powders into a slurry, forming the slurry into a green sheet, and then firing the green sheet. Alternatively, the solid electrolyte layer 2 may be produced by the sol-gel method.

The thickness of the solid electrolyte layer 2 is preferably not less than 5 μm, more preferably not less than 10 μm, even more preferably not less than 15 μm, preferably not more than 1000 μm, more preferably not more than 800 μm, and even more preferably not more than 500 μm. If the thickness of the solid electrolyte layer 2 is too small, its mechanical strength decreases to make it susceptible to brakeage and, therefore, the battery is likely to cause an internal short-circuit. If the thickness of the solid electrolyte layer 2 is too large, the distance of sodium ion conduction of the battery accompanying charge and discharge becomes long, the internal resistance thereof therefore becomes high, and, thus, the discharge capacity and the operating voltage are likely to decrease. Furthermore, when the solid electrolyte layer 2 is used in an all-solid-state secondary battery, the energy density per unit volume of the all-solid-state secondary battery is likely to decrease.

In this embodiment, the solid electrolyte layer 2 is a first solid electrolyte layer as a dense layer. In the first solid electrolyte layer, the void fraction defined by the following formula (1) is preferably not more than 20%, more preferably not more than 10%, and even more preferably not more than 5%. The lower limit of the void fraction is not particularly limited, but may be, for example, 0.1%.

$$\text{Void Fraction} = (1 - p/p0) \times 100\ (\%) \ \ldots \ \text{Formula (1)}$$

In Formula (1), p is a bulk density and p0 is a true density.

(Electrode Layer)

The electrode layer 3 contains an electrode active material 5 and solid electrolytes 6a, 6b. In this embodiment, the electrode layer 3 is formed in a manner that an electrode material is disposed inside a second solid electrolyte layer as a porous layer.

The second solid electrolyte layer is a porous layer made of a solid electrolyte 6a and having three-dimensionally connected voids. In the second solid electrolyte layer, the void fraction defined by the above formula (1) is preferably not less than 25%, more preferably not less than 30%, even more preferably not less than 40%, preferably not more than 97%, more preferably not more than 95%, and even more preferably not more than 90%.

The electrode material contains an electrode active material 5 and a solid electrolyte 6b. The electrode material may contain, as necessary, another or other materials, such as a conductive agent.

The content of the electrode active material 5 in the electrode layer 3 is not particularly limited, but is, in terms of % by mass, preferably not less than 50%, more preferably not less than 60%, preferably not more than 99.9%, more preferably not more than 95%, and even more preferably not more than 90%. When the content of the electrode active material 5 in the electrode layer 3 is within the above range, the capacity of the secondary battery can be more effectively increased.

The content of the solid electrolytes 6a, 6b in the electrode layer 3 is not particularly limited, but is, in terms of % by mass, preferably not less than 0.1%, more preferably not less than 5%, preferably not more than 50%, more preferably not more than 40%, and even more preferably not more than 30%. When the content of the solid electrolytes 6a, 6b in the electrode layer 3 is within the above range, the ionic conductivity in the electrode layer 3 can be further increased and, thus, the battery characteristics of the secondary battery can be more effectively increased. The content of the solid electrolytes 6a, 6b herein refers to the total of the content of the solid electrolyte 6a and the content of the solid electrolyte 6b.

When the electrode layer 3 contains a conductive agent, the content of the conductive agent is, in terms of % by mass, preferably not less than 0.1%, more preferably not less than 0.2%, preferably not more than 20%, and more preferably not more than 10%. When the content of the conductive agent in the electrode layer 3 is within the above range, a high electronic conductivity in the electrode layer 3 can be secured and, concurrently, the ionic conductivity in the electrode layer 3 can be further increased. Thus, the battery characteristics of the secondary battery can be more effectively increased.

Examples of the solid electrolytes 6a, 6b that can be used are those described in the section of Solid Electrolyte Layer 2. The solid electrolytes 6a, 6b are preferably of the same type of solid electrolyte, but may be used in a combination of different types of solid electrolytes.

An example of the conductive agent that can be used is a conductive carbon. Examples of the conductive carbon include acetylene black, carbon black, Ketjen black, and vapor-grown carbon fiber carbon conductive agent (VGCF). The conductive agent is preferably a carbon-based conductive agent made of any of materials as just described.

In this embodiment, the electrode active material 5 is a positive-electrode active material and the electrode layer 3 is a positive electrode layer. However, in the present invention, it is also possible that the electrode active material 5 is a negative-electrode active material and the electrode layer 3 is a negative electrode layer. Both the positive electrode layer and the negative electrode layer may be formed of the electrode layer 3.

Positive-Electrode Active Material;

The type of the positive-electrode active material is not particularly limited, but the positive-electrode active material is preferably one made of a crystallized glass containing crystals represented by a general formula $Na_xM_yP_2O_z$ (where $1 \leq x \leq 2.8$, $0.95 \leq y \leq 1.6$, $6.5 \leq z \leq 8$, and M is at least one selected from the group consisting of Fe, Ni, Co, Mn, and Cr). Particularly, the positive-electrode active material is more preferably one made of a crystallized glass containing crystals represented by a general formula $Na_xMP_2O_7$ (where $1 \leq x \leq 2$ and M is at least one selected from the group consisting of Fe, Ni, Co, Mn, and Cr). Examples that can be used as positive-electrode active material crystals as just described include $Na_2FeP_2O_7$, $Na_2CoP_2O_7$, and $Na_2NiP_2O_7$.

A crystallized glass means a glass obtained by heating (firing) a precursor glass containing an amorphous phase to precipitate crystals (crystallize the precursor glass). The entire amorphous phase may transition into a crystal phase or the amorphous phase may partially remain. Furthermore, a single type of crystals may be precipitated or two or more types of crystals may be precipitated. For example, whether or not to be a crystallized glass can be determined by the peak angles shown by powder X-ray diffraction (XRD).

Negative-Electrode Active Material;

The type of the negative-electrode active material is not particularly limited, but, for example, a carbon electrode material, such as hard carbon or soft carbon, can be used. The carbon electrode material is preferably hard carbon. However, the negative-electrode active material may contain a negative-electrode active material consisting basically of an alloy of tin, bismuth, lead, phosphorus or others capable of absorbing sodium, or metallic sodium.

Hereinafter, a description will be given of an example of a method for producing an electrode layer 3.

Production Method of Electrode Layer;

First, a second solid electrolyte layer being a porous layer is formed on a first solid electrolyte layer as a dense layer. The first solid electrolyte layer and the second solid electrolyte layer, both just described, can be formed, for example, in accordance with the method for producing a solid electrolyte sheet described in WO 2021/045039.

Specifically, the first solid electrolyte layer and the second solid electrolyte layer can be formed, for example, in accordance with a production method including the following steps (a) to (d):

(a) the step of adding an organic vehicle containing a binder to at least one powder of a first solid electrolyte powder and a raw material powder for the first solid electrolyte powder to prepare a slurry, applying the slurry to a base material, and drying the slurry to obtain a green sheet for forming a first solid electrolyte layer;

(b) the step of adding an organic vehicle containing a binder to a mixed powder containing at least one powder of a second solid electrolyte powder and a raw material powder for the second solid electrolyte powder and a polymer powder to prepare a slurry, applying the slurry to a base material, and drying the slurry to obtain a green sheet for forming a second solid electrolyte layer;

(c) the step of laying the green sheet for forming a second solid electrolyte layer on at least one of both principal surfaces of the green sheet for forming a first solid electrolyte layer to obtain a laminate; and

(d) the step of firing the laminate to form a first solid electrolyte layer being a dense layer and concurrently form a second solid electrolyte layer being a porous layer.

Next, a paste containing an electrode active material precursor, a solid electrolyte powder, and, as necessary, a conductive agent is applied to the prepared second solid electrolyte layer as a porous layer and dried, thus forming an electrode material layer. Therefore, the electrode material layer is made of the second solid electrolyte layer as a porous layer impregnated with the paste. As necessary, the paste may contain a binder, a plasticizer, a solvent or so on. Alternatively, the electrode material layer may be formed of a powder compact. Subsequently, the electrode material layer is fired and, thus, an electrode layer 3 can be formed.

The temperature for drying the paste is not particularly limited, but may be, for example, not lower than 30°C and not higher than 150°C. The time for drying the paste is not particularly limited, but may be, for example, not less than 5 minutes and not more than 600 minutes.

The atmosphere during the firing is preferably a reductive atmosphere. The firing temperature (the maximum temperature) may be, for example, 400°C to 700°C and the holding time at the temperature may be, for example, five minutes to less than three hours.

In this embodiment, in applying the paste, pastes of different content ratios between the electrode active material precursor and the solid electrolyte powder are applied in multiple layers. Thus, the content rate of solid electrolyte to electrode active material in the first electrode layer portion 3A close to the solid electrolyte layer 2 can be made higher than that in the second electrode layer portion 3B close to the first current collector layer 4. In this case, the paste can be applied, for example, in two to five installments.

Alternatively, in the present invention, by adjusting the viscosity of the paste, the void fraction of the first electrode layer portion 3A of the obtained electrode layer 3 close to the solid electrolyte layer 2 may be made larger than that of the second electrode layer portion 3B of the electrode layer 3 close to the first current collector layer 4. Also in this case, the content rate of solid electrolyte to electrode active material in the first electrode layer portion 3A close to the solid electrolyte layer 2 can be made higher than that in the second electrode layer portion 3B close to the first current collector layer 4.

In this case, the viscosity of the paste is preferably adjusted to be higher than in the past. The viscosity of the paste is preferably not less than 6000 mPa·s, more preferably not less than 8000 mPa·s, preferably not more than 50000 mPa·s, and more preferably not more than 30000 mPa·s. The viscosity of the paste can be measured with a Brookfield viscometer.

Still alternatively, the void fraction of the first electrode layer portion 3A close to the solid electrolyte layer 2 may be made larger than that of the second electrode layer portion 3B close to the first current collector layer 4 by applying slurries of different void-forming material (polymer powder) rates in multiple layers during the formation of the second solid electrolyte layer. Also in this case, the content rate of solid electrolyte to electrode active material in the first electrode layer portion 3A close to the solid electrolyte layer 2 can be made higher than that in the second electrode layer portion 3B close to the first current collector layer 4.

In this embodiment, the electrode active material precursor is a positive-electrode active material precursor. However, the electrode active material precursor may be a negative-electrode active material precursor. Hereinafter, a detailed description will be given of the paste by dividing it into a paste for forming a positive electrode layer when the electrode layer 3 is a positive electrode layer and a paste for forming a negative electrode layer when the electrode layer 3 is a negative electrode layer.

Paste for Forming Positive Electrode Layer;

An example of the paste for forming a positive electrolyte layer that can be used is a paste containing a positive-electrode active material precursor, a solid electrolyte powder, and, as necessary, a conductive agent. As necessary, the paste may contain a binder, a plasticizer, a solvent or so on.

The positive-electrode active material precursor (positive-electrode active material precursor powder) is preferably made of an amorphous oxide material that produces active material crystals when subjected to firing. In the case where the positive-electrode active material precursor powder is made of an amorphous oxide material, when subjected to firing, the amorphous oxide material not only produces active material crystals, but also softens and flows to enable formation of a dense positive electrode layer. In addition, in the case where the positive electrode layer contains a solid electrolyte, the positive-electrode active material and the solid electrolyte can be integrated together. Alternatively, in the case where the positive electrode layer adjoins the solid electrolyte layer 2, both the layers can be bonded together. As a result, an ion conduction path can be formed better, which is favorable. In the present invention, the term "amorphous oxide material" is not limited to a fully amorphous oxide material and includes those partially containing crystals (for example, those having a crystallinity of 10% or less).

The positive-electrode active material precursor powder preferably contains, in terms of % by mole of the following oxides, 25% to 55% $Na_2O$, 10% to 30% $Fe_2O_3+Cr_2O_3+MnO+CoO+NiO$, and 25% to 55% $P_2O_5$. The reasons why the composition is limited as just described will be described below. In the following description of the respective contents of the components, "%" refers to "% by mole" unless otherwise stated.

$Na_2O$ is a main component of the active material crystals represented by the general formula $Na_xM_yP_2O_z$ (where M represents at least one transition metal element selected from among Cr, Fe, Mn, Co and Ni, $1 \le x \le 2.8$, $0.95 \le y \le 1.6$, and $6.5 \le z \le 8$). The content of $Na_2O$ is preferably 25% to 55% and more preferably 30% to 50%. When the content of $Na_2O$ is within the above range, the charge and discharge capacities of the secondary battery can be further increased.

$Fe_2O_3$, $Cr_2O_3$, MnO, CoO, and NiO are also main components of the active material crystals represented by the general formula $Na_xM_yP_2O_z$. The content of $Fe_2O_3+Cr_2O_3+MnO+CoO+NiO$ is preferably 10% to 50%, more preferably 12% to 40%, and most preferably 15% to 30%. When the content of $Fe_2O_3+Cr_2O_3+MnO+CoO+NiO$ is not less than the above lower limit, the charge and discharge capacities of the secondary battery can be further increased. On the other hand, when the content of $Fe_2O_3+Cr_2O_3+MnO+CoO+NiO$ is not more than the above upper limit, this can make it less likely that undesirable crystals, such as $Fe_2O_3$, $Cr_2O_3$, MnO, CoO or NiO, precipitate. In order to further increase the cycle characteristics of the secondary battery, $Fe_2O_3$ is preferably positively contained. The content of $Fe_2O_3$ is preferably 1% to 30%, more preferably 5% to 30%, even more preferably 10% to 30%, and particularly preferably 15% to 25%. The content of each component of $Cr_2O_3$, MnO, CoO, and NiO is preferably 0% to 45%, more preferably 10% to 40%, and even more preferably 15% to 30%. In containing at least two components selected from among $Fe_2O_3$, $Cr_2O_3$, MnO, CoO, and NiO in the positive-electrode active material precursor powder, the total content of them is preferably 10% to 50%, more preferably 12% to 40%, and most preferably 15% to 30%.

$P_2O_5$ is also a main component of the active material crystals represented by the general formula $Na_xM_yP_2O_z$. The content of $P_2O_5$ is preferably 25% to 55% and more preferably 30% to 50%. When the content of $P_2O_5$ is within the above range, the charge and discharge capacities of the secondary battery can be further increased.

The positive-electrode active material precursor powder may contain, in addition to the above components, $V_2O_5$, $Nb_2O_5$, MgO, $Al_2O_3$, $TiO_2$, $ZrO_2$ or $Sc_2O_3$. These components have the effect of increasing the conductivity (electronic conductivity), which facilitates the enhancement of the rapid charge and discharge characteristics of the secondary battery. The total content of these components is preferably 0% to 25% and more preferably 0.2% to 10%. When the content of these components is not more than the above upper limit, heterogeneous crystals not contributing to the battery characteristics are less likely to be produced and, therefore, the charge and discharge capacities of the secondary battery can be further increased.

Aside from the above components, the positive-electrode active material precursor powder may contain $SiO_2$, $B_2O_3$, $GeO_2$, $Ga_2O_3$, $Sb_2O_3$ or $Bi_2O_3$. When containing any of these components, a positive-electrode active material precursor powder having a further increased glass formation ability and being more homogeneous can be easily obtained. The total content of these components is preferably 0% to 25% and more preferably 0.2% to 10%. Because these components do not contribute to the battery characteristics, an excessively large content of them leads to a tendency to decrease the charge and discharge capacities of the secondary battery.

The positive-electrode active material precursor powder is preferably made by melting a raw material batch and forming the melt into a shape. This making method is preferred because an amorphous positive-electrode active material precursor powder having excellent homogeneity can be easily obtained. Specifically, the positive-electrode active material precursor powder can be made in the following manner.

First, raw materials are formulated to give a desired composition, thus obtaining a raw material batch. Next, the obtained raw material batch is melted. The melting temperature should preferably be appropriately adjusted so that the raw material batch can be homogeneously melted. For example, the melting temperature is preferably not lower than 800°C and more preferably not lower than 900°C. The upper limit of the melting temperature is not particularly limited, but an excessively high melting temperature leads to energy loss or evaporation of the sodium component and so on. Therefore, the melting temperature is preferably not higher than 1500°C and more preferably not higher than 1400°C.

Next, the obtained melt is formed into a shape. The method for forming the melt into a shape is not particularly limited. For example, the melt may be formed into a film with rapid cooling by pouring the melt between a pair of cooling rolls or formed into an ingot by casting the melt into a mold.

Subsequently, the obtained formed body is ground to obtain a positive-electrode active material precursor powder. The average particle diameter of the positive-electrode active material precursor powder is preferably not less than 0.01 μm and less than 0.7 μm, more preferably not less than 0.03 μm and not more than 0.6 μm, even more preferably not less than 0.05 μm and not more than 0.6 μm, and particularly preferably not less than 0.1 μm and not more than 0.5 μm.

The binder is a material for binding the raw materials (raw material powders) together. Examples of the binder include: cellulose derivatives, such as carboxymethyl cellulose, hydroxypropylmethyl cellulose, hydroxypropyl cellulose, ethyl cellulose, hydroxyethyl cellulose, and hydroxymethyl cellulose, or water-soluble polymers, such as polyvinyl alcohol; thermosetting resins, such as thermosetting polyimide, phenolic resin, epoxy resin, urea resin, melamine resin, unsaturated polyester resin, and polyurethane; polycarbonate-based resins, such as polypropylene carbonate; and polyvinylidene fluoride.

Paste for Forming Negative Electrode Layer;

An example of the paste for forming a negative electrolyte layer that can be used is a paste containing a carbon electrode material precursor and a solid electrolyte precursor. In making the paste, first, a solid electrolyte precursor is prepared. In this stage, it is preferred to prepare a solution of solid electrolyte precursor. Specific examples of the solid electrolyte precursor and its solution will be described later. Next, a carbon electrode material precursor (a precursor of a carbon electrode material made of hard carbon) is prepared. Examples of the carbon electrode material precursor that can be used include appropriate sugars, biomass, and polymers.

Next, the solution of solid electrolyte precursor and the carbon electrode material precursor are mixed and then dried. Thus, a powder mixture of the solid electrolyte precursor and the carbon electrode material precursor is obtained. Next, the powder mixture is ground and then mixed with a conductive agent and a binder in an organic solvent. An example of the organic solvent that can be used is N-methyl-2-pyrrolidone. Thus, a paste is obtained.

In using a sugar as the carbon electrode material precursor, examples of the sugar include sucrose, cellulose, D-glucose, and sucrose. In using biomass as the carbon electrode material precursor, examples of the biomass include cornstalks, sorghum stalks, pine cones, mangosteen, argan nut shells, chaff, dandelion, straw cores, ramie fibers, cotton, kelp, and coconut endocarp. In using a polymer as the carbon electrode material precursor, examples of the polymer include PAN (polyacrylonitrile), pitch, PVC (polyvinyl chloride) nanofibers, polyaniline, sodium polyacrylate, tire (polymer for tire), and phosphorus-doped PAN.

When the solid electrolyte is beta-alumina, the solid electrolyte precursor can be obtained, for example, by mixing aluminum nitrate, sodium nitrate, lithium nitrate, and so on. In doing so, the ratio among the above materials is adjusted to give a desired composition ratio of the solid electrolyte.

When the solid electrolyte is NASICON crystals or $Na_5XSi_4O_{12}$ crystals (where X represents at least one selected from among group III transition metal elements and preferably rare earth elements), an example of the solution of solid electrolyte precursor is a solution containing a sodium element and a transition metal element both constituting a solid electrolyte and carbonate ions. In the solution, the sodium element is contained in the form of sodium ions and the transition metal element is contained in the form of transition metal ions. The solid electrolyte precursor is made of, for example, a gelled product or a dried product from the solution of solid electrolyte precursor. Furthermore, the solid electrolyte is made of a fired product from the solid electrolyte precursor.

A solution of solid electrolyte precursor that contains nitrate ions instead of carbonate ions may be used.

In the solution of solid electrolyte precursor, carbonate ions are preferably coordinated bidentately to the transition metal element. In this case, the transition metal element is likely to be stably present in the solution.

The solution of solid electrolyte precursor preferably contains $NR^{4+}$ (where Rs are each independently a substituent of at least one selected from the group consisting of H, $CH_3$, $C_2H_5$, and $CH_2CH_2OH$) as counterions to the sodium ions. By doing so, the transition metal element is likely to be stably present in the solution.

The solution of solid electrolyte precursor can be obtained, for example, by mixing liquid glass (sodium silicate), sodium tripolyphosphate, and a zirconium ammonium carbonate aqueous solution.

Examples of the binder that can be used are those described in the section of Paste for Forming Positive Electrode Layer.

Other Details;

The thickness of the electrode layer 3 is preferably not less than 5 $\mu$m, more preferably not less than 20 $\mu$m, even more preferably not less than 50 $\mu$m, preferably not more than 1000 $\mu$m, and more preferably not more than 200 $\mu$m. When the thickness of the electrode layer 3 is not less than the above lower limit, the charge and discharge capacities of the secondary battery can be further increased. If the thickness of the electrode layer 3 is too large, not only the resistance against electronic conduction becomes large, which may decrease the discharge capacity and operating voltage of the secondary battery, but also the stress due to shrinkage during firing becomes large, which may lead to peeling of the electrode layer 3.

(First Current Collector Layer)

The material for the first current collector layer 4 is not particularly limited, but a metallic material, such as aluminum, titanium, silver, copper, stainless steel or an alloy of any of them, can be used for the first current collector layer. These metallic materials may be used singly or in combination of two or more of them. The alloy of any of them means an alloy containing at least one of the above metals. The thickness of the first current collector layer 4 is not particularly limited, but may be not less than 0.01 $\mu$m and not more than 1000 $\mu$m.

The method for forming the first current collector layer 4 is not particularly limited and examples include physical vapor deposition methods, such as evaporation and sputtering, and chemical vapor deposition methods, such as thermal CVD, MOCVD, and plasma CVD. Examples of the other method for forming the first current collector layer 4 include liquid-phase deposition methods, such as plating, sol-gel method, and spin coating. However, the first current collector layer 4 is preferably formed on the electrode layer 3 by sputtering, the reason for which is that sputtering provides excellent adhesion.

[All-Solid-State Secondary Battery]

Fig. 5 is a schematic cross-sectional view showing an all-solid-state secondary battery according to one embodiment of the present invention. As shown in Fig. 5, the all-solid-state secondary battery 10 includes an electrical storage element 1, a negative electrode layer 20, and a second current collector layer 30.

As described previously, the electrical storage element 1 includes: a solid electrolyte layer 2; an electrode layer 3 provided on the first principal surface 2a of the solid electrolyte layer 2 and serving as a positive electrode layer; and a first current collector layer 4 provided on the electrode layer 3. In this embodiment, the negative electrode layer 20 is provided on the second principal surface 2b of the solid electrolyte layer 2 and the second current collector layer 30 is provided on the negative electrolyte 20. Examples of the material for the second current collector layer 30 that can be used are those described in the section of First Current Collector Layer.

As just described, in this embodiment, the electrode layer 3 as a constituent of the electrical storage element 1 is a positive electrode layer. However, as described previously, the electrode layer 3 may be a negative electrode layer. In this case, the all-solid-state secondary battery 10 includes, on the second principal surface 2b of the solid electrolyte layer 2, a positive electrode layer instead of the negative electrode layer 20. Alternatively, both the positive electrode layer and the negative electrode layer as constituents of the all-solid-state secondary battery 10 may have the same structure as the electrode layer 3. A current collector layer, such as the first current collector layer 4 and the second current collector layer 30, needs to be provided at least on the side of the all-solid-state secondary battery where the electrode layer 3 is disposed.

Since the all-solid-state secondary battery 10 according to this embodiment includes the electrical storage element 1, it exhibits excellent capacity retention during charge and discharge at high currents and excellent cycle characteristics during repeated charge and discharge.

Hereinafter, the present invention will be described in more detail with reference to specific examples, but the present invention is not at all limited to the following examples and can be embodied in appropriately modified forms without changing the gist of the invention.

(Example 1)

(a) Making of Green Sheet for Forming First Solid Electrolyte Layer

Using sodium carbonate ($Na_2CO_3$), aluminum oxide ($Al_2O_3$), magnesium oxide (MgO), zirconium oxide ($ZrO_2$), and yttrium oxide ($Y_2O_3$) as raw materials, a raw material powder was prepared to have a composition of, in terms of % by mole, 14.2% $Na_2O$, 75.4% $Al_2O_3$, 5.4% MgO, 4.9% $ZrO_2$, and 0.1% $Y_2O_3$, pre-fired at 1250°C for four hours, and then ground to have an average particle diameter of 2 $\mu$m. Next, 100 parts by mass of the pre-fired raw material powder and 12.5 parts by mass of polyvinyl butyral resin (trade name "BM-SZ" manufactured by SEKISUI CHEMICAL CO., LTD.) as a binder were weighed out and dispersed into N-methylpyrrolidone, followed by well stirring with a planetary centrifugal mixer to form a slurry. The obtained slurry was applied onto a polyethylene terephthalate film (PET film) using a doctor blade, dried at 70°C, and then peeled off from the PET film, thus obtaining a green sheet for forming a first solid electrolyte layer.

(b) Making of Green Sheet for Forming Second Solid Electrolyte Layer

Using sodium carbonate ($Na_2CO_3$), aluminum oxide ($Al_2O_3$), magnesium oxide (MgO), zirconium oxide ($ZrO_2$), and yttrium oxide ($Y_2O_3$) as raw materials, a raw material powder was prepared to have a composition of, in terms of % by mole, 14.2% $Na_2O$, 75.4% $Al_2O_3$, 5.4% MgO, 4.9% $ZrO_2$, and 0.1% $Y_2O_3$, pre-fired at 1250°C for four hours, and then ground to have an average particle diameter of 2 $\mu$m. Next, the pre-fired raw material powder and cross-linked polymethylmethacrylate particles (stock number "MBX-50" manufactured by Sekisui Kasei Co., Ltd., average particle diameter: 50 $\mu$m) as polymer particles were weighed out 35 parts by mass and 65 parts by mass, respectively, and mixed. The obtained mixture and polyvinyl butyral resin (trade name "BM-SZ" manufactured by SEKISUI CHEMICAL CO., LTD.) as a binder were weighed out 100 parts by mass and 12.5 parts by mass, respectively, and dispersed into N-methylpyrrolidone, followed by well stirring with a planetary centrifugal mixer to form a slurry. The obtained slurry was applied onto a PET film using a doctor blade, dried at 70°C, and then peeled off from the PET film, thus obtaining a green sheet for forming a second solid electrolyte layer.

(c) Making of Laminate

The obtained green sheet for forming a second solid electrolyte layer was laid on one of principal surfaces of the obtained green sheet for forming a first solid electrolyte layer, followed by isostatic pressing at 90°C and 40 MPa for five minutes to make a laminate.

(d) Firing of Laminate

The obtained laminate was fired at 1550°C for 30 minutes, thus producing a solid electrolyte layer (thickness: 300 $\mu$m) in which a second solid electrolyte layer as a porous layer was provided on one principal surface of a first solid electrolyte layer as a dense layer.
In the obtained solid electrolyte layer, the thicknesses of the first solid electrolyte layer and the second solid electrolyte layer were 200 $\mu$m and 100 $\mu$m, respectively. Furthermore, the void fractions of the first solid electrolyte layer and the second solid electrolyte layer were 5% and 78%, respectively.

(e) Making of Paste for Forming Positive Electrode Layer

Using sodium metaphosphate ($NaPO_3$), ferric oxide ($Fe_2O_3$), and orthophosphoric acid ($H_3PO_4$) as raw materials, these powdered raw materials were formulated to give a composition of, in terms of % by mole, 40% $Na_2O$, 20% $Fe_2O_3$, and 40% $P_2O_5$ and melted at 1250°C for 45 minutes in an air atmosphere. Thereafter, the melt was poured between a pair of rotating rollers and formed into a shape with rapid cooling, thus obtaining a film-like glass. The obtained film-like glass was ground in a ball mill and a planetary ball mill to obtain a glass powder (a positive-electrode active material precursor powder) having an average particle diameter ($D_{50}$) of 0.2 $\mu$m. As a result of powder X-ray diffraction (XRD) measurement, the obtained glass powder was confirmed to be amorphous.
The obtained positive-electrode active material precursor powder, a solid electrolyte powder, and acetylene black (SUPER C65 manufactured by TIMCAL) as a conductive carbon (a conductive agent) were weighed out 83% by mass, 13% by mass, and 4% by mass, respectively, and mixed for 30 minutes with an agate pestle in an agate mortar, thus making a positive electrode composite material powder. An amount of 10 parts by mass of polypropylene carbonate (PPC) was added to 100 parts by mass of the positive electrode composite material powder made as above and 20 parts by mass of N-methylpyrrolidone was further added to the mixture. These materials were well stirred with a planetary centrifugal mixer to form them into a slurry, thus making a paste for forming a positive electrode layer.

(f) Formation of Positive Electrode Layer

The paste for forming a positive electrode layer was applied onto a principal surface of the second solid electrolyte layer to have an area of 1 cm$^2$ and a capacity of 1 mAh/cm$^2$ and dried at 70°C for three hours, thus forming a positive-electrode material layer. The formed positive-electrode material layer was fired under conditions of holding at 525°C for 30 minutes in a mixed gas atmosphere of 4% by volume $H_2$ and 96% by volume $N_2$, thus forming a positive electrode layer on the one principal surface of the solid electrolyte layer.
The application of the paste for forming a positive electrode layer is conducted by applying pastes of different content ratios between the electrode active material precursor (positive-electrode active material precursor) and the solid electrolyte powder in multiple layers. Specifically, in applying second and subsequent layers of paste after applying a first layer using the paste made under the above conditions, three layers were applied using pastes of gradually decreasing content ratios of solid electrolyte powder to electrode active material precursor.

(g) Measurement of Composition Distribution in Positive Electrode Layer

The composition distribution in the positive electrode layer was determined by doing elemental analysis and image processing of a cross section of the positive electrode layer taken along the direction of thickness thereof. Specifically, the content rate of solid electrolyte to electrode active material (positive-electrode active material) in the positive electrode layer was measured with an energy dispersive X-ray fluorescence analyzer (EDX). For each divided electrode section, the molar ratio among the content of Fe contained in the electrode active material (positive-electrode active material), the content of Al contained in the solid electrolyte, and the content of C contained in the conductive agent was calculated. Then, from the respective specific gravities of the electrode active material, the solid electrolyte, and the conductive agent, the volume ratio between the electrode active material and the solid electrolyte in the electrode composite material was determined. Furthermore, from a cross-sectional image of the electrode layer (cross-sectional image of the positive electrode layer) obtained with a scanning electron microscope (SEM), the void fraction and the electrode composite material occupancy in each divided electrode section were calculated using image analysis. Then, by multiplying the determined electrode composite material occupancy by the volume ratio between the electrode active material and the solid electrolyte in the electrode composite material, the volume ratio between the electrode active material and the solid electrolyte in the divided electrode section was calculated.

The content rate of solid electrolyte to electrode active material (solid electrolyte to electrode active material) in the positive electrode layer was measured in each of the case where the positive electrode layer was divided into two sections in the direction of thickness (Fig. 1) and the case where the positive electrode layer was divided into three sections in the direction of thickness (Fig. 2). In the case where the positive electrode layer was divided into two sections, the rate X (solid electrolyte to electrode active material) in a first electrode layer portion and the rate Y (solid electrolyte to electrode active material) in a second electrode layer portion in order closer to the solid electrolyte layer in the direction of thickness were measured. In the case where the positive electrode layer was divided into three sections, the rate X (solid electrolyte to electrode active material) in a first electrode layer portion, the rate Y (solid electrolyte to electrode active material) in a second electrode layer portion, and the rate Z (solid electrolyte to electrode active material) in a third electrode layer portion in order closer to the solid electrolyte layer in the direction of thickness were measured.

(h) Formation of Current Collector and Assembly of Coin Cell

A 100 nm thick evaporated aluminum film was formed as a current collector on the entire surface of the positive electrode layer. Thereafter, in an argon glove box with a dew point of -60°C or lower, metallic sodium serving as a negative electrode layer was pressure-bonded to the principal surface of the solid electrolyte layer located on the side thereof opposite to the positive electrode layer and the obtained laminate was encapsulated into a CR2032 coin cell, thus producing an all-solid-state secondary battery.

(i) High-Current Charge-Discharge Test

The all-solid-state secondary battery was vacuum encapsulated with an aluminum laminated package. Next, the all-solid-state secondary battery underwent a high-current charge-discharge test (charging under 0.1 C/4.5 V CC/CV, 0.02 C cutoff, and 25°C conditions, and discharging under 0.02 C or 0.1 C CC, 1.5 V cutoff, and 25°C conditions) and the rate of retention of the discharge capacity at 0.1 C to the discharge capacity at 0.02 C (0.1C/0.02C Capacity Retention) was determined.

(j) Charge-Discharge Cycle Test

The all-solid-state secondary battery was vacuum encapsulated with an aluminum laminated package. Next, the all-solid-state secondary battery underwent a charge-discharge cycle test (charging under 0.1 C/4.5 V CC/CV, 0.02 C cutoff, and 25°C conditions, and discharging under 0.1 C CC, 1.5 V cutoff, and 25°C conditions) and the rate of retention of the discharge capacity after 100 cycles to the initial discharge capacity (100 Cycles After Capacity Retention) was determined.

(Comparative Example 1)

An all-solid-state secondary battery was produced in the same manner as in Example 1 except that only the first solid electrolyte layer being a dense layer was used as the solid electrolyte layer and, in applying the paste for forming a positive electrode layer, the paste was applied, not in multiple layers, but only once, and the all-solid-state secondary battery underwent the charge-discharge cycle test. Also in Comparative Example 1, the content rates of solid electrolyte to electrode active material (solid electrolyte to electrode active material) in the positive electrode layer were determined in the same manner as in Example 1.

(Comparative Example 2)

An all-solid-state secondary battery was produced in the same manner as in Example 1 except that, in applying the paste for forming a positive electrode layer, the paste was applied, not in multiple layers, but only once, and the all-solid-state secondary battery underwent the charge-discharge cycle test. Also in Comparative Example 2, the content rates of solid electrolyte to electrode active material (solid electrolyte to electrode active material) in the positive electrode layer were determined in the same manner as in Example 1.

The results are shown in Table 1 below. In Table 1, the unit of X, Y, and Z is % by volume.

[Table 1]

| | Porous Layer | Composite Material Composition Distribution (divided into 2 sections) | | Composite Material Composition Distribution (divided into 3 sections) | | 0.1C/0.02C Capacity Retention | 100 Cycles After Capacity Retention |
|---|---|---|---|---|---|---|---|
| Ex. 1 | present | gradient | X=90%,Y=70% | gradient | X=90%,Y=79%, Z=70% | 66% | 77% |
| Comp. Ex. 1 | absent | no gradient | X=13%,Y=13% | no gradient | X=13%,Y=13%, Z=13% | 32% | 31% |
| Comp. Ex. 2 | present | no gradient | X=78%,Y=78% | no gradient | X=78%,Y=78%, Z=78% | 51% | 56% |

[Reference Signs List]

1, 1A ... electrical storage element

2 ... solid electrolyte layer

2a, 2b ... first, second principal surface

3 ... electrode layer

3A, 3C ... first electrode layer portion

3B, 3D ... second electrode layer portion

3E ... third electrode layer portion

4 ... first current collector layer

5 ... electrode active material

6a, 6b ... solid electrolyte

10 ... all-solid-state secondary battery

20 ... negative electrode layer

30 ... second current collector layer

**Claims**

1. An electrical storage element comprising:

a solid electrolyte layer;
an electrode layer provided on one principal surface of the solid electrolyte layer and containing an electrode active material and a solid electrolyte; and
a current collector layer provided on a principal surface of the electrode layer opposite to the solid electrolyte layer side,
wherein a first electrode layer portion of the electrode layer disposed on the solid electrolyte layer side than a middle of the electrode layer in a direction of thickness of the electrode layer has a higher content rate of the solid electrolyte to the electrode active material than a second electrode layer portion of the electrode layer disposed on the current collector layer side than the middle of the electrode layer in the direction of thickness of the electrode layer.

2.  The electrical storage element according to claim 1, wherein the content rate of the solid electrolyte to the electrode active material in the electrode layer increases from the current collector layer side toward the solid electrolyte side.

3.  The electrical storage element according to claim 1 or 2, wherein when the solid electrolyte layer is a first solid electrolyte layer being a dense layer, the electrode layer is formed in a manner that an electrode material containing an electrode active material and a solid electrolyte is disposed inside a second solid electrolyte layer being a porous layer.

4.  The electrical storage element according to claim 1 or 2, wherein the first electrode layer portion has a larger void fraction than the second electrode layer portion.

5.  The electrical storage element according to claim 1 or 2, wherein the solid electrolyte contains at least one type of material selected from the group consisting of β"-alumina, β-alumina, and NASICON crystals.

6.  The electrical storage element according to claim 1 or 2, wherein the solid electrolyte layer and the electrode layer are sintered bodies.

7.  An all-solid-state secondary battery comprising the electrical storage element according to claim 1 or 2.

[FIG. 1]

[FIG. 2]

[FIG. 3]

SOLID ELECTROLYTE LAYER SIDE ↔ CURRENT COLLECTOR LAYER SIDE

[FIG. 4]

[FIG. 5]

<u>10</u>

## INTERNATIONAL SEARCH REPORT

| International application No. |
|---|
| **PCT/JP2023/043598** |

**A. CLASSIFICATION OF SUBJECT MATTER**

*H01M 10/058*(2010.01)i; *H01M 4/13*(2010.01)i; *H01M 4/62*(2006.01)i; *H01M 10/054*(2010.01)i; *H01M 10/0562*(2010.01)i
FI:  H01M10/058; H01M10/0562; H01M4/13; H01M4/62 Z; H01M10/054

According to International Patent Classification (IPC) or to both national classification and IPC

**B. FIELDS SEARCHED**

Minimum documentation searched (classification system followed by classification symbols)

H01M10/058; H01M4/13; H01M4/62; H01M10/054; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-212430 A (TOYOTA JIDOSHA KABUSHIKI KAISHA) 12 December 2019 (2019-12-12) | 1-7 |
| A | WO 2014/128944 A1 (HITACHI, LTD) 28 August 2014 (2014-08-28) | 1-7 |
| A | JP 2022-152275 A (MAXELL, LTD.) 12 October 2022 (2022-10-12) | 1-7 |
| A | JP 2012-209256 A (OHARA INC.) 25 October 2012 (2012-10-25) | 1-7 |

☐ Further documents are listed in the continuation of Box C.    ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **08 February 2024** | **27 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/043598**

| Patent document cited in search report | | | Publication date (day/month/year) | Patent family member(s) | | | Publication date (day/month/year) |
|---|---|---|---|---|---|---|---|
| JP | 2019-212430 | A | 12 December 2019 | US | 2019/0372156 | A1 | |
| | | | | CN | 110556524 | A | |
| WO | 2014/128944 | A1 | 28 August 2014 | (Family: none) | | | |
| JP | 2022-152275 | A | 12 October 2022 | (Family: none) | | | |
| JP | 2012-209256 | A | 25 October 2012 | US | 2012/0237834 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021045039 A